# EUROPÄISCHE PATENTSCHRIFT

(11) **EP 3 974 152 B1**
(45) Veröffentlichungstag und Bekanntmachung des Hinweises auf die Patenterteilung: **07.06.2023**
(21) Anmeldenummer: 21192407.1
(22) Anmeldetag: 20.08.2021
(51) Int. Cl.: B29C 51/08, B29C 51/10, B29C 51/26, B29C 51/30, B29K 67/00, B29K 23/00, B29L 31/00

(54) **VERFAHREN ZUM CODIEREN EINES VERPACKUNGSBEHÄLTERS UND CODIERTER VERPACKUNGSBEHÄLTER FÜR KONSUMGÜTER**
METHOD FOR CODING A PACKAGING CONTAINER AND CODED PACKAGING CONTAINER FOR CONSUMER GOODS
PROCÉDÉ DE CODAGE D'UN RÉCIPIENT D'EMBALLAGE ET RÉCIPIENT D'EMBALLAGE CODÉ POUR BIENS DE CONSOMMATION

(30) Priorität: 28.09.2020 DE 102020125214
(43) Veröffentlichungstag der Anmeldung: 30.03.2022
(73) Patentinhaber: PACCOR Packaging GmbH, 40468 Düsseldorf (DE)
(72) Erfinder: SCHÜTTE, Andreas, 40667 Meerbusch (DE); RULAND, Helmut, 50189 Elsdorf (DE); LORENZ, Nicolas, 82319 Starnberg (DE)
(74) Vertreter: Hannke Bittner & Partner

(56) Entgegenhaltungen:
- WO-A1-2021/167971
- DE-U1-202018 107 348
- US-A- 5 366 791
- US-A1- 2005 067 727
- US-A1- 2014 315 153

## Beschreibung

Die Erfindung betrifft ein Verfahren zum Codieren eines Verpackungsbehälters oder eines zugehörigen Bestandteils aus formstabilem Kunststoffmaterial, der vorzugsweise für die Aufbewahrung von Konsumgütern, wie Lebensmitteln, geeignet und vorgesehen ist, sowie einen Verpackungsbehälter aus formstabilem Kunststoffmaterial, der für die Aufbewahrung der Lebensmittel vorgesehen ist.

Verfahren zum Herstellen von Verpackungsbehältern aus steifem Kunststoffmaterial für die Lebensmittelindustrie sind vielseitig bekannt. Beispielsweise können hier die Druckschriften EP 0868357 A1 oder DE 19544973 A1 genannt werden. Diese Herstellungsverfahren zeichnen sich in der Regel dadurch aus, dass derartige Verpackungsbehälter in einem Tiefziehverfahren derart gebildet werden, dass ein flaches Kunststoffmaterial als folienförmiges Element über eine Form gelegt wird und anschließend in einem Tiefziehvorgang in diese Form hineingezogen wird. Hierfür können sowohl Vakuumeinrichtungen ein Vakuum an der Unterseite des folienförmigen Elementes innerhalb der Form erzeugen, als auch von oben einwirkende Tiefziehstempel verwendet werden. Derartige Verfahren werden verwendet, um eine große Anzahl von Verpackungsbehältern für die Lebensmittelindustrie in einer Serienproduktion mit hohem Durchsatz herzustellen, wobei dazugehörige Deckelelemente in einem separaten Verfahren hergestellt werden.

Derartige Tiefziehverfahren weisen den Nachteil auf, dass bei dem Hineinziehen eines mittleren Abschnittes des folienförmigen Kunststoffmaterials in die Werkzeugform ein Umformprozess im Kantenbereich, also am Übergang von der späteren Bodenfläche des Verpackungsbehälters zu den seitlichen Wandelementen, stattfindet. Dieser Umformprozess hat häufig eine Umformung im Kantenbereich beim Übergang von der Bodenfläche zu den Wandelementen um bis zu 90° zur Folge, wobei eine faltenfreie und glatte Umformung vorliegen sollte. Bedingt durch das jeweils verwendete Material und der Verwendung einer Negativ- beziehungsweise Positiv-Werkzeugform aus beständigem Material, wie beispielsweise Metall, besteht somit die Gefahr einer Oberflächenveränderung im Bereich des späteren seitlichen Wandelementes des Verpackungsbehälters, der beispielsweise für das Anbieten von Fertigsalaten, kalten Fertiggerichten, Gemüsezusammensetzungen etc. verwendet wird. Gerne werden diese an ihrer Oberfläche mit einer Beschriftung oder sonstigen Aufdrucken versehen.

Das hat zur Folge, dass derartige Kunststoffmaterialien vor dem eigentlichen Tiefziehvorgang - obwohl es zu diesem Zeitpunkt denkbar einfach wäre - eben nicht bedruckt werden oder mit Aufklebern versehen werden. Dies ist insbesondere auch zutreffend für Aufkleber, die einen Code aufweisen. Denn insbesondere Codierungen, wie beispielsweise Barcodes, müssen deshalb mittels eines separaten Aufklebers oder mit einem den Verpackungsbehälter umgebenden Papierband nachträglich, also nach dem Tiefziehen, an dem Verpackungsbehälter angebracht werden, welches in der Regel aufwendiger ist, da die seitlichen Wände bereits ihre Endausrichtung haben und ein Aufbringen hierdurch erschwert wird. Jedoch sind derartige Codierungen beziehungsweise Barcodes sehr erwünscht, um ein schnelles Bezahlen durch Auslesen der Barcodes zu ermöglichen. Zudem sind derartige Barcodes in der Regel nur an einer bestimmten Position für den gesamten Verpackungsbehälter mit dem sich darin befindenden Gericht und dem dazugehörigen Deckel wiederzufinden, sodass die Kassiererin diese Position zunächst finden muss und anschließend unter den Barcodescanner halten muss. Hierfür ist eventuell auch ein Verkippen des Gerichtes beziehungsweise der Mahlzeit zusammen mit dem Verpackungsbehälter notwendig. Dies ist in der Regel nicht gewünscht. Zudem können aufgebrachte Barcodes in Form von Etiketten, Labeln oder Banderolen durch Deformierung oder Abreißen eine Identifizierung erschweren und/oder unmöglich machen.

Hinzu kommt, dass derartige Verpackungsbehälter aus Kunststoffmaterialien zunehmend ein Umweltproblem darstellen, da sie häufig nicht einem gezielten Recyclingkreislauf unterworfen sind. Abhängig von dem jeweiligen Land und den dazugehörigen Umweltauflagen, insbesondere Müllrecyclingauflagen, finden deshalb derartige Behälter vielleicht noch den Weg in eine praktizierte Mülltrennung, jedoch nicht den Weg zu einem geregelten Recyclingkreislauf, bei dem speziell dieses Material von der jeweiligen Herstellerfirma, aus dem der Verpackungsbehälter hergestellt ist, einem Recyclingvorgang für die Erschaffung neuer Behälter zugeordnet wird. Beispiele für derartige rigide beziehungsweise steife Kunststoffmaterialien sind HDPE, PE, PET und PP.

Ein weiterer Nachteil bei der Codierung von Verpackungsbehältern in der bisherigen Form besteht darin, dass bei der Verwendung von Aufklebern für die Aufbringung eines Barcodes diese überklebt werden können oder sogar ausgetauscht werden können. Dies ist ebenso nicht erwünscht, da ein schnelles Auslesen eines Preises und sonstiger Daten von dieser Codierung nicht möglich ist und gegebenenfalls beim Austauschen derartiger Barcodes ein Betrugsfall vorliegt.

Dokument DE 20 2018 107348 U1 offenbart ein Kunststoff-Bauteil für ein Kraftfahrzeug, wobei auf dem Kunststoff-Bauteil eine maschinenlesbare Codestruktur zur Identifizierung des Kunststoff-Bauteils vorgesehen ist, wobei die maschinenlesbare Codestruktur einstückig zusammen mit dem Kunststoff-Bauteil 1 ausgebildet ist. Das Kunststoff-Bauteil wird in einem Blasformverfahren oder in einem Thermoformverfahren hergestellt.

Dokument US 5 366 791 A betrifft ein thermoformbares Plastikmaterial, das ein starres polymeres Kernmaterial und ein flexibles Folienmaterial umfasst, das auf das Kernmaterial laminiert ist, wobei eine Fläche der flexiblen Folie vor dem Laminieren bedruckt wird.

Dokument US 2014/315153 A1 stellt ein Verfahren bereit, bei dem ein Design einer Negativform von Zähnen mittels eines Computers erzeugt wird.

Somit ist es Aufgabe der Erfindung, ein Verfahren zur Herstellung und zur Codierung von Verpackungsbehältern oder eines zugehörigen Bestandteils aus formstabilen Kunststoffmaterialien für die Konsumgüter - insbesondere für die Lebensmittelaufbewahrung - sowie einen derartigen Verpackungsbehälter oder einen zugehörigen Bestandteil zur Verfügung zu stellen, bei dem der Verpackungsbehälter bereits bei der Herstellung zu einem Informationsträger wird, dessen Informationen auf schnelle und einfache Art, gezielt für einen Rücklauf in einen Recyclingkreislauf und ohne Verwendung zusätzlicher Aufbringungs- beziehungsweise Anbringungshilfsmittel, ausgelesen werden können.

Diese Aufgabe wird verfahrensseitig durch die Merkmale des Anspruches 1 und erzeugnisseitig durch die Merkmale des Anspruches 10 gelöst.

Ein wesentlicher Punkt der Erfindung liegt darin, dass bei einem Verfahren zum Codieren eines Verpackungsbehälters oder eines zugehörigen Bestandteils aus formstabilem Kunststoffmaterial, wobei der Verpackungsbehälter für die Aufbewahrung von Konsumgütern, wie Lebensmittel, Waschmittel etc., geeignet ist, das folienförmige Kunststoffmaterial eine Formveränderungsbehandlung zur Herstellung einer Mehrzahl an Codes erfährt, während es mit einer Werkzeugform tiefgezogen wird. Auf diese Weise kann, da die Werkzeugform bei Vorliegen einer Negativform entsprechend ausgearbeitete Einsätze auf der Innenseite und am Bodenbereich der Oberfläche aufweist, die jeweilige Formveränderungsbehandlung an der Außenseite des Kunststoffmaterials während des Tiefziehens in Form eines aufgebrachten Codes, insbesondere eines digitalen Wasserzeichens, deren Existenz für den Betrachter nahezu unsichtbar ist, erwirkt werden und zwar an vielen Positionen der Außenseite des Verpackungsbehälters oder eines zugehörigen Bestandteils in beliebiger Anzahl. Ein zuvor plattenförmiges bzw. folienförmiges flaches Kunststoffmaterial weist vor dem Stattfinden des eigentlichen Tiefziehvorgangs noch keine Aufdrucke oder Aufkleber auf, da diese während des Tiefziehvorgangs aufgrund des Nachuntenziehens und einer stattfindenden Umformung im Kantenbereich beim Übergang von der Bodenfläche zu den Wandelementen um bis zu 90° eine Beschädigung erfahren würden und somit nicht dauerhaft auf der Außenseite des Verpackungsbehälters in unbeschädigter Form vorhanden bleiben können. Vielmehr wird während des Tiefziehens der Verpackungsbehälter nicht nur in seiner endgültigen Form ausgebildet, sondern auch mit der bereits erwähnten Mehrzahl an Codes durch einen einzigen Tiefziehvorgang versehen.

Während des eigentlichen Tiefziehvorganges wird somit an verschiedenen Positionen der Oberfläche einer ersten Seite des zuvor plattenförmig bzw. folienförmig und flach ausgebildeten Kunststoffmaterials, also an ersten Oberflächen von Außenseiten des zu formenden dreidimensionalen Verpackungsbehälters, die Formveränderungsbehandlung durchgeführt, welche nicht einem Druckverfahren ähnelt. Hierdurch kann sichergestellt werden, dass nicht, wie bei den bedruckten Flächen, die Gefahr einer Verletzung der Druckoberfläche während des Tiefziehvorganges stattfindet. Selbstverständlich können die Formveränderungsbehandlungen auch an Oberflächen von Innenseiten eines zu formenden dreidimensionalen Verpackungsbehälters bzw. von dazugehörigen Bestandteilen, wie einem Deckel, stattfinden. Dies findet dann statt, wenn statt einer Negativ- eine Positivform als Werkzeugform verwendet wird. Als Ergebnis sind dann die Codes bzw. die Mehrzahl an Codes durch einen Tiefziehvorgang über eine Positivform in die Oberflächen von Innenseiten des dreidimensionalen Verpackungsbehälters bzw. dessen zugehörigen Bestandteil, wie einem Deckel, eingebracht.

Ein hierfür wesentlicher vorausgehender Verfahrensschritt beinhaltet das Umwandeln von Daten von mindestens einem zuvor abgespeicherten zweidimensionalen Codemuster mittels einer Datenumwandlungseinrichtung in Daten eines dreidimensionalen Codemusters. Dieses dreidimensionale Codemuster wird erfindungsgemäß mittels eines Lasergerätes in die zweiten Oberflächen der Werkzeugform oder darin anordenbarer Formeinsätze eingearbeitet. Bei dieser zweiten Formveränderungsbehandlung erhalten die zweiten Oberflächen erfindungsgemäß Oberflächenvertiefungen und/oder -erhebungen in Form von kleinsten Punkten oder anderen kleinsten Querschnittsflächen.

Alternativ zu dem Lasergerät können jegliche andere kontaktfreie Bearbeitungsverfahren angewendet werden, die letztendlich eine Formveränderungsbehandlung an den Oberflächen von Außenflächen bzw. Innenflächen des dreidimensionalen Verpackungsbehälters oder dessen zugehörigen Bestandteile erzielen, indem wiederum die Bearbeitung der Werkzeugform oder dazugehöriger Einsätze erfolgt.

Es werden demzufolge Daten von beispielsweise einem zweidimensionalen Barcode, einem digitalen Wasserzeichen und/oder ein QR-Code derart umgewandelt, dass sie im dreidimensionalen Raum dargestellt werden können, um entsprechende Vertiefungen und Erhebungen an den Stellen auszubilden, wo zuvor helle und dunkle Flächenanteile des Codes in dem zweidimensionalen Codemuster vorlagen. Dies bedeutet beispielsweise, dass ein dunkler Punkt in einem zweidimensionalen Codemuster innerhalb einer seitlichen Innenwand oder einer Bodenfläche der Werkzeugform eine bestimmte Vertiefung in Punktform darstellt, wohingegen ein heller Punkt des zweidimensionalen Codemusters eine Erhebung oder einen Flächenbereich ohne Vertiefung in dem dreidimensionalen Codemuster auf den zweiten Oberflächen der Außenseiten bzw. den seitlichen Wandflächen oder der Bodenfläche der Werkzeugform wiedergibt.

Ein hierfür notwendiges Ablatieren, beziehungsweise Schmelzen oder Eingravieren kleinster Codemuster in die Oberfläche der Innenflächen der Werkzeugform, die in der Regel aus Metall sind, oder in entsprechend eingelegte Einsätze, die in der Regel auch aus Metall sind, findet mittels eines Lasergerätes mit einem oder mehreren Laserstrahlen statt. Diese Laserstrahlen können punktuell die Oberflächen derart erwärmen und gegebenenfalls eine Ablation, insbesondere einen Schmelzvorgang durchführen und auf kleinstem Raum Codemuster, zum Beispiel in quadratischer Form, wie man es von QR-Codes kennt, an den zweiten Oberflächen in dreidimensionaler Form erzeugen. Bei einem anschließenden Tiefziehvorgang wird das rigide bzw. formstabile bzw. steife Kunststoffmaterial gegen diese Bereiche der Werkzeugform oder dessen Einsätze derart gedrückt, dass sich in dem Kunststoffmaterial an der Außenseite der Verpackungsbehälters das Muster des dreidimensionalen Codes einprägt und aufgrund der Vielfachverwendung an verschiedensten Positionen der Außenseite des Verpackungsbehälters vorhanden ist. Ein derartiges Behandeln der Oberflächeninnenseiten der Werkzeugform mittels Laserstrahlen ist nicht einfach zu praktizieren und durchzuführen, da die Gefahr besteht, bei derartigen Laserbehandlungen unerwünschte Erhebungen in den Randbereichen von den beispielsweise lochartigen Vertiefungen, deren Form so gewünscht ist, zu verursachen. Allerdings haben lange Versuchsreihen der Anmelderin Lösungen gezeigt, wie derartige Erhebungen und Vertiefungen bearbeitet werden können, um langfristig ein konstantes Ergebnis im Tiefziehprozess und der resultierenden Codierung zu erzielen.

Der Tiefziehvorgang kann beispielsweise durch Unterdruck oder Stempel, beziehungsweise auch Überdruck unterstützt werden, um ein schnellstmögliches Umformen eines folienförmigen, flachen Kunststoffmaterials in eine Endform der eigentlichen Schale des Verpackungsbehälter oder eines zugehörigen Bestandteils sicherzustellen.

Der Code kann in identischer Form beliebig oft auf Wand- und Bodenseiten des Verpackungsbehälters oder eines zugehörigen Bestandteils aufgebracht werden, um dadurch eine Verteilung des Codes über die späteren seitlichen Wandelemente, bzw. äußeren Wandflächen, bzw. auf den ersten Oberflächen der Außenseiten des Verpackungsbehälters und auch die äußere Bodenfläche, zu erhalten. Auf diese Weise wird sichergestellt, dass der Verpackungsbehälter von jeder beliebigen Seite aus schnell und unkompliziert ausgelesen werden kann, wie es beispielsweise bei dem Bezahlen an der Kasse notwendig ist. Hierdurch wird Zeit gespart, da nicht erst langwierig nach einem Barcode auf einem Aufkleber der Verpackung gesucht werden muss.

Bei Verwendung von digitalen Wasserzeichen, die für den Betrachter unsichtbar oder nahezu unsichtbar oder auch sichtbar auf dem Behälter angebracht sind, kann zudem sichergestellt werden, dass zudem keine Fälschung eines Barcodes und von Barcodeinformationen stattfindet, da das digitale Wasserzeichen als solches nicht unmittelbar wahrnehmbar ist. Jedoch können derartige digitale Wasserzeichen von herkömmlichen Lesegeräten unkompliziert ausgelesen werden. Insbesondere ist hierbei zu betonen, dass zweidimensional agierende und lesende Auslesegeräte dazu in der Lage sind, den erfindungsgemäß aufgebrachten dreidimensionalen Code an der Außenseite des Verpackungsbehälters zu lesen.

Zum Auslesen der Daten des digitalen Wasserzeichens müssen zugehörige Daten, z.B. in einer Cloud, hinterlegt werden.

Für eine Verbesserung der Unsichtbarkeit des digitalen Wasserzeichens kann das auf dem Verpackungsbehälter aufgebrachte Codemuster in seiner Auflösung und in seiner Erstreckung bzw. Ausdehnung hinsichtlich der Erhebungen, die aus den Vertiefungen der Werkzeugform bzw. der Werkzeugformeinsätze entstehen, derart optimiert werden, dass es sich in die ohnehin vorhandene Oberflächenrauigkeit der Oberfläche der Außenflächen des Verpackungsbehälters gewissermaßen integriert bzw. darin verschwindet und dadurch unsichtbar wird. Vorteilhaft ist hierbei auch die flächenmäßige Erstreckung des digitalen Wasserzeichens über die gesamte Außenfläche, beispielsweise einer seitlichen Wandfläche des Verpackungsbehälters oder einer Bodenfläche hinweg, sodass kein Unterschied zu einer nicht codierten Außenfläche des Verpackungsbehälters gesehen werden kann. Auch in den Eckbereichen des Verpackungsbehälters ist die Anbringung eines digitalen Wasserzeichens denkbar. Das rechteckige Codemuster kann somit digital an eine Verpackungsbehälterkontur angepasst bzw. gepatcht werden. Somit wird das Codemuster abhängig von der Geometrie der Verpackungsbehälterkontur verzerrt, indem es an die Kontur angepasst wird. Dies kann datentechnisch dadurch erfolgen, dass 3-D-Daten des Verpackungsbehälters dazu verwendet werden, die entsprechende Verzerrung des rechteckigen Codemusters zum Übertragen auf Teile oder die Gesamtheit des Verpackungsbehälters zur Anpassung an seine Kontur während der Datenerrechnung mitverwendet werden. Somit wird bei der Umwandlung der Daten eines 2-D-Codes in ein 3-D-Codemuster eine Art von dreidimensionaler Textur erhalten.

Es findet also zunächst eine Umwandlung von Daten eines zweidimensionalen Codemusters in Daten eines dreidimensionalen Codemusters statt und anschließend wird bei einem Auslesevorgang, wenn dieser erwünscht ist, wie zum Beispiel im Rahmen eines Recyclingvorganges, wiederum eine Umwandlung eines dreidimensionalen Codemusters in Daten eines zweidimensionalen Codemusters durchgeführt. Diese Daten können dann wiederum dazu verwendet werden, um beispielsweise eine gezielte Aussortierung dieser Behälter mit dem bestimmten Material und dem bestimmten Hersteller auf einem Sortierband zu bewirken oder Lebensmittel- von Nichtlebensmittelverpackungsmaterialien zu trennen oder zu sortieren.

Dies kann sogar dann erfolgreich erreicht werden, wenn der Behälter bereits zerknittert beziehungsweise zerstört worden ist, da aufgrund der Vielzahl von aufgebrachten Codes an der Außenseite des Verpackungsbehälters an vielen verschiedenen Positionen es nahezu immer möglich ist, erfolgreich einen Lesevorgang und eine Umwandlung in Daten eines zweidimensionalen Codemusters durchzuführen. Somit können gezielt aussortierte Behälter eines bestimmten Herstellers und mit einem bestimmten Material zur Herstellung eines qualitativ hochwertigen Recyclats verwendet werden.

Die Verwendung von digitalen Wasserzeichen ermöglicht es somit, dass - selbst wenn der Verpackungsbehälter nach erfolgter Mahlzeit zerstört im Abfall landet - aufgrund deren Verteilung über den Verpackungsbehälter hinweg und deren dauerhaften Einbringung in das Verpackungsbehältermaterial, also in das steife Kunststoffmaterial, ein Erkennen für den sich anschließenden Recyclingvorgang möglich ist. Hierbei können sowohl das Material, wie beispielsweise PP, PE, PET, rPET etc., als auch die Herkunft, der Herstellungsort, die Herstellungsart, die Verpackungsbehälterinhaltsinformation, die GTIN-Nummer, die SKU-Nummer etc. ausgelesen werden, um den Verpackungsbehälter gezielt beispielsweise einem bestimmten Recyclingkreislauf zu unterwerfen und zukommen zu lassen, sodass anschließend wieder neue Behälter aus dem Recyclingmaterial mit genau dieser Substanz hergestellt werden können. Somit können auslesbare Daten, die in dem Wasserzeichen enthalten sind, für eine Identifizierung des Materials und des Verpackungsbehälters oder dessen Bestandteile an sich dazu genutzt werden, im Recyclingverfahren entsprechend kategorisiert und sortiert zu werden. Die Daten, welche in dem Wasserzeichen zu entnehmen sind in Form eines Auslesevorganges, lassen Rückschlüsse über das Unternehmen geben, welches die Verpackungsbehälter in Verkehr gebracht hat, welches Abfallunternehmen beteiligt war, wer im Recyclingvorgang beteiligt war, welche Sortiereinheit aktiv daran beteiligt war und welche Kontrollorgane während des Recyclingvorganges, des Herstellungsvorganges und/oder des Befüllungsvorganges von dem Verpackungsbehälter beteiligt waren.

Zudem kann die Verwendung von digitalen Wasserzeichen dem Käufer beziehungsweise dem Benutzer Informationen über den Verpackungsinhalt und sonstige Daten zu dem Lebensmittelhersteller geben, indem dieser mit seinem Smartphone ganz einfach irgendwo einen Abschnitt der Wandfläche des Verpackungsbehälters oder des Bodens abscannt beziehungsweise ausliest.

Die bereits erwähnten, bei der zweiten Formveränderungsbehandlung entstehenden Vertiefungen der Werkzeugform beziehungsweise der Oberflächen von Einsätzen, die in eine derartige Werkzeugform eingesetzt werden, sind als die bei der ersten Formveränderungsbehandlung entstehenden Erhebungen ausgebildet. Auf diese Art und Weise wird durch einen Negativformeffekt das dreidimensionale Codemuster auf die Außenflächen des Verpackungsbehälters in vielfacher Form und gegebenenfalls in identischer Form übertragen.

Vorzugsweise werden die Positionen der Mehrzahl an Codes derart ausgewählt, dass sie sich auf den äußeren Wandflächen und/oder auf eine äußere Bodenfläche des tiefgezogenen Verpackungsbehälters verteilen. Hierbei sind die digitalen Wasserzeichen aus quadratischen Anordnungen von kleinen Punkten bestehend, wobei die quadratischen Anordnungen in unterschiedlichen Größenabmaßen auf demselben Verpackungsbehälter vorhanden sein können. Selbstverständlich können derartige digitale Wasserzeichen jede andere Art von Formen, wie beispielsweise die Form eines Kreises, eines Dreiecks, oder eines Rechteckes ohne gleiche Seitenlängen, aufweisen.

Ein Verpackungsbehälter aus formstabilem Kunststoffmaterial, der für die Aufbewahrung von Lebensmitteln geeignet ist, hat demzufolge vorteilhaft Wandflächen und/oder eine Bodenfläche mit einer Mehrzahl an digitalen Wasserzeichen, die für den Betrachter nahezu unsichtbar sind. Dies findet während eines Tiefziehvorganges ohne Verzögerung in dem Gesamtprozessablauf zur Herstellung des Verpackungsbehälters an einer Mehrzahl an Positionen durch eine Formveränderungsbehandlung statt. Mitentscheidend für die Erkennbarkeit eines digitalen Wasserzeichens an der Oberfläche von Außenflächen des Verpackungsbehälters ist auch die Auflösung der zur Verfügung gestellten zweidimensionalen Signaldaten zur Umwandlung in 3-D-Daten, sodass mehr oder weniger exakt umrissene Erhebungen auf den Außenflächen des Verpackungsbehälters entstehen.

Weitere vorteilhafte Ausführungsformen ergeben sich aus den Unteransprüchen. Nachfolgend wird ein bevorzugtes Ausführungsbeispiel im Zusammenhang mit der Zeichnung beschrieben.

Hierbei zeigen:
- Fig.1: seitliche Darstellung des fertigproduzierten Verpackungsbehälters mit der erfindungsgemäßen Codierung;
- Fig.2: die Aufnahme eines Bodenbereiches des erfindungsgemäßen Verpackungsbehälters mit der erfindungsgemäßen Codierung;
- Fig.3: in einer Draufsicht verschiedene Werkzeugformeinsätze zur Herstellung von dreidimensionalen Codes an der Außenfläche eines Verpackungsbehälters gemäß dem erfindungsgemäßen Verfahren;
- Fig.4: in einer seitlichen Querschnittsdarstellung eine Tiefziehform mit dem plattenförmigen flachen Grundstoffmaterial in erfindungsgemäßer codierter Form;
- Fig.5: in einer Querschnittsdarstellung die Form mit dem Kunststoffmaterial in erfindungsgemäßer codierter Form;
- Fig.6: Mikroskopaufnahme eines Ausschnitts eines dreidimensionalen Codes, wie er gemäß dem erfindungsgemäßen Verfahren auf eine Oberfläche der Werkzeugform in Innenbereich oder auf dessen Einsätzen eingebracht worden ist;
- Fig.7: eine schematische Darstellung verschiedener Einrichtungen zur Umwandlung und Einbringung von Codierdaten mittels eines Lasergeräts nach dem erfindungsgemäßen Verfahren.

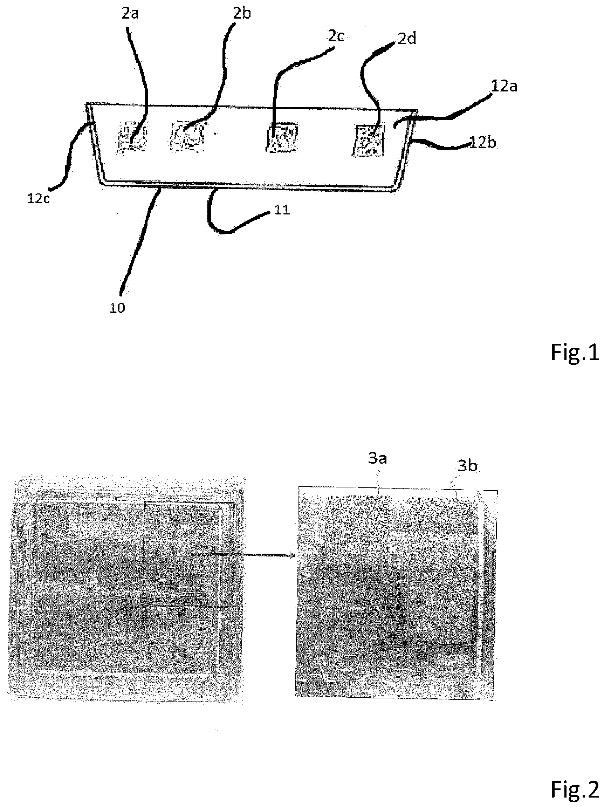

Fig.1 zeigt einen seitlich dargestellten fertig hergestellten Verpackungsbehälter 10, der im oberen Bereich noch offen ist und mit einem Deckel abgedeckt werden könnte. Dieser Darstellung ist deutlich zu entnehmen, dass die nahezu unsichtbaren Wasserzeichen 2a, 2b, 2c und 2d auf einer seitlichen vorderen Wandfläche 12a, beziehungsweise außenseitigen Außenfläche angeordnet sind. Weitere hier nicht darstellbare Wasserzeichen sind auf der rechten und der linken seitlichen Wandfläche 12b und 12c angeordnet. Dies trifft auch auf eine hintere Wandfläche, die hier nicht dargestellt werden kann, zu. Auf einer Bodenfläche 11 des Verpackungsbehälter 10 sind ebenso Wasserzeichen außenseitig angeordnet. Diese entsprechen den Wasserzeichen 3a, 3b, wie sie beispielsweise in Fig.2, welche die Fotografie eines real hergestellten Kunststoffbehälters, beziehungsweise eines Verpackungsbehälters, wiedergibt dargestellt sind. Diese quadratisch ausgebildeten digitalen Wasserzeichen 3a und 3b können entweder zweifach oder vierfach oder auch in mehrfacher Form auf dem Bodenbereich beziehungsweise der Außenseite der Bodenfläche angeordnet sein. Auf diese Weise ist zuverlässig ein sicheres, gezieltes und schnelles Abscannen von Informationen des Behälters möglich.

Somit ist dieser Darstellung gemäß Fig.1 deutlich zu entnehmen, dass aufgrund der guten Verteilung sämtlicher digitaler Wasserzeichen, die unterschiedliche Abstände aufweisen können, ein Auslesen von Informationen von jeder Position aus möglich ist. Dies kann schnell und unkompliziert erfolgen.

Die Verteilung der Wasserzeichen kann beispielsweise derart sein, dass ein Verpackungsbehälter mit im Wesentlichen quadratischer Grundflächenform quadratisch ausgebildete digitale Wasserzeichen auf jeder seitlichen Wandfläche aufweist. An seiner Unterseite, also der Bodenfläche, könnten es zwei etwas größer ausgestaltete digitale Wasserzeichen oder auch vier Wasserzeichen, wie in Fig.2 wiedergegeben, sein.

Der Abstand von derartigen digitalen Wasserzeichen könnte beispielsweise im seitlichen Wandflächenbereich derart ausgebildet sein, dass zwischen jedem digitalen Wasserzeichen nur ein schmaler Rand von 2 - 5 mm vorliegt. Die Wasserzeichen könnten in quadratischer Form mit einer Kantenlänge von z.B. 10 - 30 mm nicht nur nebeneinander, sondern auch zweireihig oder dreireihig übereinander an den seitlichen Wandflächen angeordnet sein.

Alternativ kann an Stelle einer Verteilung einzelner Wasserzeichen über eine Seitenwandfläche und/oder eine Bodenfläche auch eine vollflächige Anbringung der Wasserzeichen über eine gesamte Seitenwandfläche oder eine gesamte Bodenfläche oder einfach über sämtliche Wand- und Bodenflächen hinweg gewählt werden. Dies sollte in Abhängigkeit von der Geometrie der Verpackung derart geschehen, dass insbesondere in den Rand- und Eckbereichen ein Auslesen nicht unmöglich wird. Bei einem Auslesevorgang des Wasserzeichens in einer Recyclinganlage muss dann nur ein kleiner Anteil des gesamtflächigen Wasserzeichens ausgelesen bzw. von der Leseanlage gefunden werden.

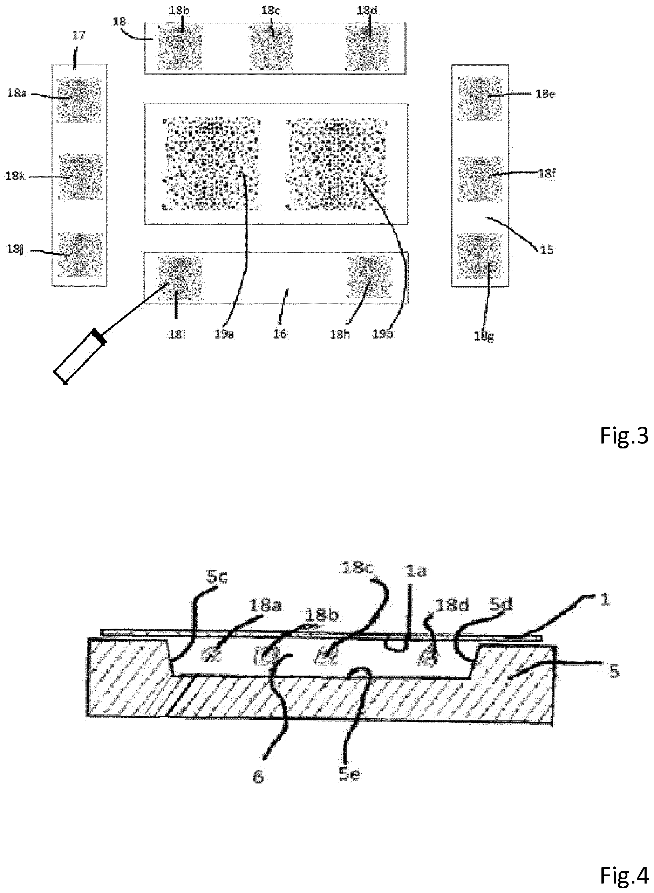

In Fig.3 ist in einer Draufsicht ein Werkzeugformeinsatz dargestellt, der nach erfindungsgemäßem Verfahren aufgebrachte, beziehungsweise eingearbeitete 3D-Codes 18a - 18k aufweist. Der Werkzeugformeinsatz ist zur vereinfachten besseren Darstellung in einer fiktiven aufgeklappten Form wiedergegeben, sodass in dieser Draufsicht sämtliche Innenseiten und der innere Bodenbereich getrennt voneinander zu sehen sind. Ein Lasergerät 4 mit Laserstrahlen 4a kann derart gestaltet werden, dass viele kleine Punkte an unterschiedlichen Orten, beispielsweise in Form eines Quadrates angeordnet werden, wobei diese Punkte durch ihre Anordnung eine gewisse Information aufgrund ihrer Anordnungsposition und aufgrund ihrer Tiefe in das Material im Bereich der Oberflächen enthalten.

Derartige quadratförmige Codierungen können als Muster bei der hier gezeigten Werkzeugform eingesetzt werden, beispielsweise entlang des seitlichen Wandbereiches, welcher durch die Formeinsatzseitenflächen 15, 16, 17 und 18 gebildet wird, und somit später für die seitlichen Wandflächen des fertigen Verpackungsbehälters zuständig sind. Diese dreidimensionalen Codemuster können mit gleichen oder unterschiedlichen Abständen und auch in unterschiedlicher Größe angeordnet sein. Dies wird durch die 3D-Codes 18a, 18b, 18c, 18d, 18e - k wiedergegeben.

Zusätzlich oder alternativ können auch im Bereich der späteren Bodenfläche des Verpackungsbehälters digitale Wasserzeichen angeordnet werden. Dies wird dadurch erreicht, dass die der Bodenfläche zugeordnete Formeinsatzbodenfläche 19 beispielsweise eingearbeitete dreidimensionale Codes 19a und 19b aufweist, die wiederum als digitales Wasserzeichen ausgebildet sein können. Diese können beispielsweise in ihrer Größenabmessung eine größere Seitenlänge eines Quadrats gegenüber den Codes 18a - k aufweisen. Diese bodenseitigen angeordneten digitalen Wasserzeichen werden mit dem Bezugszeichen 19a, 19b bezeichnet.

In Fig.4 wird in einer Querschnittsdarstellung eine Tiefziehform 5 mit einer Negativaussparung 6 dargestellt, wobei diese negative Aussparung 6 die äußere Form des Verpackungsbehälters, der tiefzuziehen ist, wiedergibt.

Das plattenförmige flache Kunststoffmaterial wird mit seiner ersten Seite 1a verkehrt herum auf die Tiefziehform 5 gelegt.

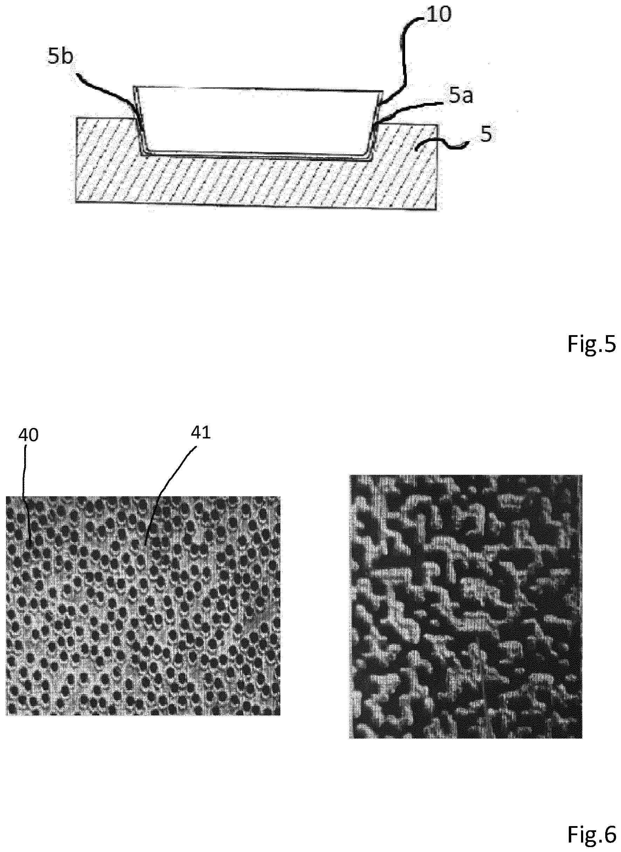

Anschließend findet, wie in Fig.5 dargestellt, der eigentliche Tiefziehvorgang statt. Hierbei wird das plattenförmige Kunststoffmaterial 1 durch Unterdruck oder auch durch Überdruck oder einem von oben einwirkendem Stempel in die Aussparung 6 der Form hineingepresst, indem das Material entlang der Kanten 5a und 5b nach unten gezogen wird. Hierbei ist darauf zu achten, dass keine Beschädigung der Außenfläche des zu produzierenden Verpackungsbehälters stattfindet. Beim Hinunterziehen, beziehungsweise beim Tiefziehen des Kunststoffmaterials 1 findet zugleich ein Anpressen der dadurch entstehenden seitlichen Flächen 12a, 12b, 12c und einer Bodenfläche 11 und gegebenenfalls weiterer Flächen des Verpackungsbehälters an die seitlichen Innenwände der Werkzeugform statt, wobei diese Wände ebenso wie die Bodenfläche der Werkzeugform mit Formeinsatzseitenflächen und - bodenflächen 15, 16, 17 18 und 19 versehen sein können, wie sie in Fig.3 dargestellt waren. Diese Formeinsatzflächen wiederum zeichnen sich - wie bereits beschrieben - durch gezielte minimalste Vertiefungen in das Plattenmaterial, welches Metall sein kann, zur Darstellung der 3-D-Codes aus. Diese Codes prägen dann während des Tiefziehvorganges eine Außenoberfläche des späteren Verpackungsbehälters derart, dass der Code auf die Außenfläche übertragen wird, jedoch nach wie vor aufgrund der geringen Erstreckung in drei Dimensionen in die dritte Dimension nahezu unsichtbar bleibt.

Die Innenseiten der Werkzeugform bzw. die hier nicht näher dargestellten Formeinsatzflächen innerhalb der Werkzeugform werden mit 5c, 5d und der Bodenbereich mit 5e bezeichnet.

In Fig.6 ist in einer mikroskopischen Ausschnittsdarstellung ein Bereich von aufgebrachten dreidimensionalen Codes an der Innenseite der Werkzeugform aus Metall oder an Metalleinsätzen, die in die Werkzeugform eingesetzt werden, wiedergegeben. Dieser Darstellung ist zu entnehmen, dass minimalste punktähnliche Vertiefungen 40 mit einer bestimmten Tiefe vorhanden sind, die beispielsweise im Bereich von 1 µm - 200 µm, vorzugsweise 5 - 50 µm, liegen können. Zwischen diesen punktförmigen Vertiefungen sind unveränderte Bereiche 41 vorhanden, die entsprechend bei einem zweidimensionalen Code dem weißen Flächenanteil zwischen schwarzen Punkten zuzuordnen wären.

Da die Metalleinsätze oder Innenseiten der Werkzeugform selbst nun Vertiefungen an ihren Oberflächen aufweisen, werden bei dem sich anschließenden Tiefziehvorgang eines Kunststoffmaterials in die Werkzeugform hinein die ersten Oberflächen der Außenflächen des zu produzierenden Verpackungsbehälters, also die seitlichen Wandflächen und die Unterseite des Verpackungsbehälters, an diesen Stellen Erhebungen erhalten, um hierdurch ein digitales Wasserzeichen auf den ersten Oberflächen der Außenflächen und der Bodenfläche des Verpackungsbehälters zu erhalten. Derartige Erhebungen können sich in einem Bereich von 1 - 30 µm bewegen. In Bezug auf eine Gesamtwandstärke der seitlichen Wandflächen und auch der Bodenfläche sind diese Erhebungen äußerst gering und deshalb kaum wahrnehmbar. Denn übliche Wandstärken, die von der Geometrie des Produktes, also beispielsweise der Form eines Trinkbechers oder der Form eines Trays abhängen, liegen bei 250 µm - 600 µm, vorzugsweise 300 µm - 500 µm. Zudem hängen die Wandstärken von dem verwendeten Kunststoffmaterial und der Position an der Außenfläche ab, da bei dem Tiefziehvorgang üblicherweise die Wandstärke im oberen Bereich des so erhaltenden Behälters größer ist als im mittleren Bereich der Seitenwände. Zu den Eckradien des Behälters hin wird die Wandstärke dann wieder größer. Im unteren Bereich, der an die Bodenfläche angrenzt sowie in dem Bodenflächenbereich selbst ist eine Wandstärke vorhanden, die nahe der Ausgangsstärke des folienartigen Materials, abhängig vom Tiefziehverhältnis, der Stempelgeometrie, der Produktkontur etc., liegt. Im Übrigen kann auch die Art des digitalen Wasserzeichens bzw. des Digicodes den Wanddickenaufbau hinsichtlich der Wandflächen beeinflussen.

Auf der rechten Seite dieser Darstellung gemäß Fig.6 ist auch eine weitere mögliche Ausgestaltung eines Codes, wie er mittels eines Lasergeräts in die Metalloberflächen eingebracht werden kann, zu sehen. Diese Form des Codes ist häufig bei QR-Codes zu sehen.

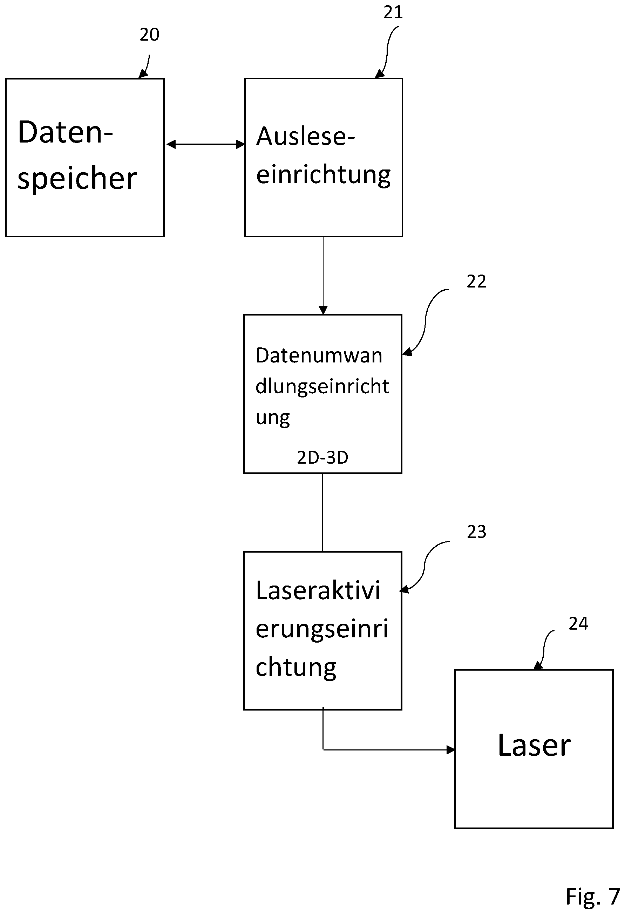

In Fig.7 ist in einem Verfahrensablauf nochmals kurz, dem erfindungsgemäßen Verfahrens entsprechend, die Umwandlung von zweidimensionalen gespeicherten Codedaten in dreidimensionale Codedaten wiedergegeben.

Es sind Daten zu einem zweidimensionalen Code, wie sie beispielsweise von Codeerzeugungseinrichtungen generiert werden, abgespeichert. Auf diesen Datenspeicher 20 greift eine Ausleseeinrichtung 21 zu, die nach Start eines Laserbehandlungsvorganges die Daten aus dem Datenspeicher ausliest und an eine Datenumwandlungseinrichtung 22 weitergibt. Diese soll eine Umwandlung der bisher vorliegenden elektronischen zweidimensionalen Daten für ein zweidimensionales Codemuster in Daten für ein dreidimensionales Codemuster herbeiführen. Das heißt, es werden dunkle und helle Bereiche in dem zweidimensionalen Codemuster in verschieden tiefe Flächenanteile innerhalb der Oberfläche einer Werkzeugform oder dazugehöriger Formeinsätze umgewandelt.

Eine Laseraktivierungseinrichtung 23 erhält dann einen Aktivierungsbefehl, um die Daten des dreidimensionalen Codemusters mit Hilfe eines Lasergerätes 24 dann in die Oberflächenwerkzeugform bzw. die Werkzeugformeinsätze einzubringen.

### Bezugszeichenliste

- 1: plattenförmiges flaches Kunststoffmaterial
- 1a: Seite
- 2a: dreidimensionale Codes, digitales Wasserzeichen
- 2b: dreidimensionale Codes, digitales Wasserzeichen
- 2c: dreidimensionale Codes, digitales Wasserzeichen
- 2d: dreidimensionale Codes, digitales Wasserzeichen
- 3a: dreidimensionale Codes, digitales Wasserzeichen
- 3b: dreidimensionale Codes, digitales Wasserzeichen
- 4: Lasergerät
- 4a: Laserstrahlen
- 5: Werkzeugform, Tiefziehform
- 5a: Kante
- 5b: Kante
- 5c: Platteneinsatz, Formeinsatz innerhalb der Werkzeugform
- 5d: Platteneinsatz, Formeinsatz innerhalb der Werkzeugform
- 5e: Bodenfläche der Werkzeugform
- 6: Negativaussparung
- 10: Verpackungsbehälter
- 11: Bodenfläche
- 12a: vordere seitliche Wandfläche/Außenseite
- 12b: rechte seitliche Wandfläche/Außenseite
- 12c: linke seitliche Wandfläche/Außenseite
- 15: Formeinsatzseitenfläche
- 16: Formeinsatzseitenfläche
- 17: Formeinsatzseitenfläche
- 18: Formeinsatzseitenfläche
- 18a: dreidimensionale Codemuster
- 18b: dreidimensionale Codemuster
- 18c: dreidimensionale Codemuster
- 18d: dreidimensionale Codemuster
- 18e: dreidimensionale Codemuster
- 18f: dreidimensionale Codemuster
- 18g: dreidimensionale Codemuster
- 18h: dreidimensionale Codemuster
- 18i: dreidimensionale Codemuster
- 18j: dreidimensionale Codemuster
- 18k: dreidimensionale Codemuster
- 19: Formeinsatzbodenfläche
- 19a: bodenseitig angeordnetes digitales Wasserzeichen
- 19b: bodenseitig angeordnetes digitales Wasserzeichen
- 20: Datenspeicher
- 21: Ausleseeinrichtung
- 22: Datenumwandlungseinrichtung
- 23: Laseraktivierungseinrichtung
- 24: Lasergerät
- 40: Oberflächenvertiefungen
- 41: Oberflächenerhebungen

## Patentansprüche

1. Verfahren zum Codieren eines formstabilen Verpackungsbehälters oder eines zugehörigen Bestandteils aus Kunststoffmaterial (1), wobei der Verpackungsbehälter für die Aufbewahrung von Konsumgütern, wie Lebensmittel, Waschmittel etc. geeignet ist,
**dadurch gekennzeichnet, dass**
ein folienförmiges, flaches Kunststoffmaterial (1) zur Bildung des dreidimensionalen Verpackungsbehälters oder des zugehörigen Bestandteils mit einer Werkzeugform (5) tiefgezogen wird, während seine Außenseiten (12a, 12b, 12c) oder Innenseiten an einer Mehrzahl an Positionen eine auf ihre erste Oberfläche einwirkende erste Formveränderungsbehandlung zur Herstellung einer Mehrzahl an dreidimensionalen Codes (2a - 2d; 3a, 3b) erfahren,
wobei ein dreidimensionales Codemuster (18a - 18k; 19a, 19b) mittels eines Gerätes für ein kontaktfreies Bearbeitungsverfahren, wie eines Lasergerätes (4; 24) in zweite Oberflächen der Werkzeugform (5) oder darin anordenbarer Formeinsätze (15, 16, 17, 18, 19) derart eingearbeitet wird, dass bei einer zweiten Formveränderungsbehandlung die Oberflächenvertiefungen (40) und/oder -erhebungen (41) in Form von kleinsten Punkten oder anderen kleinsten Querschnittsflächen in der zweiten Oberfläche enthalten sind.

2. Verfahren nach Anspruch 1,
**dadurch gekennzeichnet, dass**
in einem vorausgehenden Verfahrensschritt Daten von mindestens einem zweidimensionalen Codemuster mittels einer Datenumwandlungseinrichtung (22) in Daten des dreidimensionalen Codemusters (18a- 18k; 19a, 19b) unter Berücksichtigung einer Kontur des Verpackungsbehälters oder des zugehörigen Bestandteils umgewandelt werden.

3. Verfahren nach Anspruch 1 oder 2,
**dadurch gekennzeichnet, dass**
das Lasergerät (4; 24) mit einem oder mehreren Laserstrahlen (4a) punktuell die zweiten Oberflächen erwärmt und zur Ablation, insbesondere zum Schmelzen bringt.

4. Verfahren nach einem der vorangegangenen Ansprüche,
**dadurch gekennzeichnet, dass**
die bei der zweiten Formveränderungsbehandlung entstehenden Oberflächenvertiefungen (40) und/oder -erhebungen (41) komplementär zu bei der ersten Formveränderungsbehandlung entstehenden Oberflächenvertiefungen (40) und/oder -erhebungen (41) ausgebildet sind.

5. Verfahren nach einem der vorangegangenen Ansprüche,
**dadurch gekennzeichnet, dass**
die Mehrzahl an dreidimensionalen Codes (2a - d; 3a, 3b) auf dem Verpackungsbehälter (10) eine Mehrzahl an sich wiederholenden, vorzugsweise identischen digitalen Wasserzeichen (2a - d; 3a, 3b) darstellen, deren Existenz für den Betrachter nahezu unsichtbar oder sichtbar ist.

6. Verfahren nach einem der vorangegangenen Ansprüche,
**dadurch gekennzeichnet, dass**
die Positionen der Mehrzahl an dreidimensionalen Codes (2a - d; 3a, 3b) derart ausgewählt werden, dass sie sich auf äußeren Wandflächen (12a, 12b, 12c) und/oder inneren Wandflächen und/oder auf eine äußere Bodenfläche (11) des tiefgezogenen Verpackungsbehälters (10) und/oder auf Deckelspiegeln, Deckelrändern und/oder Deckelschürzen von einem Deckel des Verpackungsbehälters (10) verteilen.

7. Verfahren nach Anspruch 6,
**dadurch gekennzeichnet, dass**
die digitalen Wasserzeichen (2a - d; 3a, 3b) jeweils aus vorzugsweise rechteckförmigen, insbesondere quadratischen Anordnungen von unregelmäßig verteilten, zweidimensional betrachtet kleinsten Punkten und/oder anderen Flächenmustern und gegebenenfalls der Kontur des Verpackungsbehälters oder des Bestandteils angepasst verzerrt, bestehen, wobei die quadratischen Anordnungen unterschiedliche Größenabmaße auf demselben Verpackungsbehälter (10) aufweisen können.

8. Verfahren nach Anspruch 6 oder 7,
**dadurch gekennzeichnet, dass**
die Mehrzahl an digitalen Wasserzeichen (2a - d; 3a, 3b) codierte Informationen zur Zusammensetzung des verwendeten Kunststoffmaterials, der Herstellungsart, Verpackungsbehälter, Inhaltsinformationen, GTIN-Nummern, SKU-Nummern und Informationen für den Verbraucher und/oder den Benutzer enthalten kann, auch zur weiteren Nutzung für ein Identifizierungsverfahren bei einem Sortier-, Trenn- und Recyclingverfahren.

9. Verpackungsbehälter aus formstabilem Kunststoffmaterial (1), der für die Aufbewahrung von Konsumgütern, wie Lebensmittel, Waschmittel, etc. geeignet ist, und mittels eines Verfahren nach einem der vorhergehenden Ansprüche codiert ist,
**dadurch gekennzeichnet, dass**
Wandflächen (12a, 12b, 12c) und/oder eine Bodenfläche (11) des Verpackungsbehälters (10) eine Mehrzahl an digitalen Wasserzeichen (2a - d, 3a, 3b) aufweisen, die für den Betrachter nahezu unsichtbar oder sichtbar sind und während eines Tiefziehvorganges zur Herstellung des Verpackungsbehälters (10) oder eines Konsumgüters wie Lebensmittel, Waschmittel etc. an einer Mehrzahl an Positionen durch eine Formveränderungsbehandlung aufgebracht werden.

10. Verpackungsbehälter nach Anspruch 9,
**dadurch gekennzeichnet, dass**
die digitalen Wasserzeichen (2a - d; 3a, 3b) rechteckförmig, vorzugsweise quadratisch ausgebildet sind und mit gleichen oder unterschiedlichen Größenabmessungen über den Verpackungsbehälter (10) verteilt sind.

## Claims

1. Method for encoding a dimensionally stable packaging container or an associated constituent made of plastics material (1), wherein the packaging container is suitable for storing consumer goods such as food, detergents, etc.,
**characterised in that**
a film-shaped, flat plastics material (1) for forming the three-dimensional packaging container or the associated constituent is deep-drawn using a tool mould (5) while, at a plurality of positions, the outer sides (12a, 12b, 12c) or the inner sides thereof undergo a first shape-changing treatment acting on the first surface thereof for producing a plurality of three-dimensional codes (2a-2d; 3a, 3b), wherein a three-dimensional code pattern (18a-18k; 19a, 19b) is incorporated into second surfaces of the tool mould (5) or mould inserts (15, 16, 17, 18, 19) that can be arranged therein by means of a device for a non-contact processing method, such as a laser device (4; 24), in such a way that, during a second shape-changing treatment, the surface depressions (40) and/or surface elevations (41) are contained in the second surface in the form of tiny dots or other tiny cross-sectional areas.

2. Method according to claim 1,
**characterised in that**,
in a preceding method step, data from at least one two-dimensional code pattern are converted by means of a data conversion device (22) into data of a three-dimensional code pattern (18a - 18k, 19a, 19b), taking into account a contour of the packaging container or the associated constituent.

3. Method according to claim 1 or 2,
**characterised in that**
the laser device (4; 24) heats the second surfaces at specific points using one or more laser beams (4a) and causes them to ablate, in particular to melt.

4. Method according to any of the preceding claims,
**characterised in that**
the surface depressions (40) and/or surface elevations (41) resulting from the second shape-changing treatment are designed to be complementary to the surface depressions (40) and/or surface elevations (41) resulting from the first shape-changing treatment.

5. Method according to any of the preceding claims,
**characterised in that**
the plurality of three-dimensional codes (2a-d; 3a, 3b) on the packaging container (10) represent a plurality of repeating, preferably identical digital watermarks (2a-d; 3a, 3b), the existence of which is almost invisible or visible to the viewer.

6. Method according to any of the preceding claims,
**characterised in that**
the positions of the plurality of three-dimensional codes (2a-d; 3a, 3b) are selected in such a way that they are distributed on outer wall surfaces (12a, 12b, 12c) and/or inner wall surfaces and/or on an outer bottom surface (11) of the deep-drawn packaging container (10) and/or on lid mirrors, lid edges, and/or lid aprons of a lid of the packaging container (10).

7. Method according to claim 6,
**characterised in that**
the digital watermarks (2a-d; 3a, 3b) each consist of preferably rectangular, in particular square, arrangements of irregularly distributed, tiny dots in a two-dimensional view and/or other surface patterns and, if necessary, distorted adapted to the contour of the packaging container or the constituent, it being possible for the square arrangements to have different sizes on the same packaging container (10).

8. Method according to claim 6 or claim 7,
**characterised in that**
the plurality of digital watermarks (2a-d; 3a, 3b) can contain encoded information on the composition of the plastics material used, the production method, packaging container, content information, GTIN numbers, SKU numbers and information for the consumer and/or the user, also for further use for an identification method in a sorting, separation and recycling method.

9. Packaging container made of dimensionally stable plastics material (1), which packaging container is suitable for storing consumer goods such as food, detergents, etc., and is encoded by means of a method according to one of the preceding claims,
**characterised in that**
wall surfaces (12a, 12b, 12c) and/or a bottom surface (11) of the packaging container (10) have a plurality of digital watermarks (2a-d, 3a, 3b) which are almost invisible or visible to the viewer and which are applied at a plurality of positions by means of a shape-changing treatment during a deep-drawing process for producing the packaging container (10) or a consumer goods such as food, detergents, etc.

10. Packaging container according to claim 9,
**characterised in that**
the digital watermarks (2a-d; 3a, 3b) are rectangular, preferably square, and are distributed over the packaging container (10) with the same or different size dimensions.

## Revendications

1. Procédé pour le codage d'un récipient d'emballage dimensionnellement stable ou d'un composant associé en matière plastique (1), le récipient d'emballage étant approprié pour la conservation de produits de consommation tels que des aliments, des lessives, etc.,
**caractérisé par le fait qu'**
une matière plastique plate en forme de feuille (1), pour la formation du récipient d'emballage tridimensionnel ou du composant associé, est emboutie à l'aide d'un moule de formage (5), tandis qu'en une pluralité de positions, ses côtés extérieurs (12a, 12b, 12c) ou ses côtés intérieurs subissent un premier traitement de modification de forme agissant sur leur première surface pour la production d'une pluralité de codes tridimensionnels (2a - 2d ; 3a, 3b),
un motif de codage tridimensionnel (18a - 18k ; 19a, 19b) étant incorporé dans des secondes surfaces du moule de formage (5) ou d'inserts de moule (15, 16, 17, 18, 19) pouvant y être disposés au moyen d'un appareil pour un procédé de traitement sans contact, tel qu'un appareil laser (4 ; 24), de telle sorte que, lors d'un second traitement de modification de forme, les creux (40) et/ou les protubérances (41) de surface sont contenus dans la seconde surface sous la forme de points minuscules ou autres surfaces en coupe transversale minuscules.

2. Procédé selon la revendication 1,
**caractérisé par le fait que**,
dans une étape de procédé précédente, des données d'au moins un modèle de codage bidimensionnel sont converties au moyen d'un dispositif de conversion de données (22) en données du modèle de codage tridimensionnel (18a - 18k; 19a, 19b) en tenant compte d'un contour du récipient d'emballage ou du composant associé.

3. Procédé selon l'une des revendications 1 ou 2,
**caractérisé par le fait que**
l'appareil laser (4 ; 24) chauffe ponctuellement les deuxièmes surfaces au moyen d'un ou plusieurs faisceaux laser (4a) et conduit à l'ablation, en particulier la fusion.

4. Procédé selon l'une des revendications précédentes,
**caractérisé par le fait que**
les creux (40) et/ou les protubérances (41) de surface résultant du second traitement de modification de forme sont configurés pour être complémentaires des creux (40) et/ou protubérances (41) de surface résultant du premier traitement de modification de forme.

5. Procédé selon l'une des revendications précédentes,
**caractérisé par le fait que**
la pluralité de codes tridimensionnels (2a - d ; 3a, 3b) sur le récipient d'emballage (10) représente une pluralité de filigranes numériques répétitifs (2a - d ; 3a, 3b), de préférence identiques, dont l'existence est presque invisible ou visible pour l'observateur.

6. Procédé selon l'une des revendications précédentes,
**caractérisé par le fait que**
les positions de la pluralité de codes tridimensionnels (2a - d ; 3a, 3b) sont choisies de telle sorte qu'elles sont distribuées sur des surfaces de paroi extérieures (12a, 12b, 12c) et/ou des surfaces de paroi intérieures et/ou sur une surface de fond extérieure (11) du récipient d'emballage embouti (10) et/ou sur des parties plates de couvercle, des bords de couvercle et/ou des jupes de couvercle d'un couvercle du récipient d'emballage (10).

7. Procédé selon la revendication 6,
**caractérisé par le fait que**
les filigranes numériques (2a - d ; 3a, 3b) se composent chacun d'agencements de préférence rectangulaires, en particulier carrés, de points et/ou autres motifs de surface irrégulièrement distribués, minuscules vu en deux dimensions, et le cas échéant déformés de manière adaptée au contour du récipient d'emballage ou du composant, les agencements carrés pouvant présenter des dimensions différentes sur le même récipient d'emballage (10).

8. Procédé selon l'une des revendications 6 ou 7,
**caractérisé par le fait que**
la pluralité de filigranes numériques (2a - d ; 3a, 3b) peut contenir des informations codées sur la composition de la matière plastique utilisée, le mode de fabrication, le récipient d'emballage, des informations sur le contenu, des numéros GTIN, des numéros SKU et des informations pour le consommateur et /ou l'utilisateur, également pour une autre utilisation pour un procédé d'identification dans un processus de tri, de séparation et de recyclage.

9. Récipient d'emballage en matière plastique dimensionnellement stable (1), qui est approprié pour la conservation de produits de consommation tels que des aliments, des lessives, etc., et est codé au moyen d'un procédé selon l'une des revendications précédentes,
**caractérisé par le fait que**
des surfaces de paroi (12a, 12b, 12c) et/ou une surface de fond (11) du récipient d'emballage (10) présentent une pluralité de filigranes numériques (2a - d, 3a, 3b), qui sont presque invisibles ou visibles pour l'observateur et qui sont appliqués en une pluralité de positions par un traitement de modification de forme pendant une opération d'emboutissage pour la fabrication du récipient d'emballage (10) ou d'un produit de consommation, tel que des aliments, des lessives, etc.

10. Récipient d'emballage selon la revendication 9,
**caractérisé par le fait que**
les filigranes numériques (2a-d ; 3a, 3b) sont rectangulaires, de préférence carrés, et sont distribués sur le récipient d'emballage (10) avec des dimensions identiques ou différentes.
